(19) Europäisches Patentamt
European Patent Office
Office européen des brevets

(11) EP 2 066 704 B1

(12) **EUROPÄISCHE PATENTSCHRIFT**

(45) Veröffentlichungstag und Bekanntmachung des Hinweises auf die Patenterteilung:
**23.03.2011 Patentblatt 2011/12**

(21) Anmeldenummer: **07818182.3**

(22) Anmeldetag: **17.09.2007**

(51) Int Cl.:
***C08F 4/00*** *(2006.01)* ***C08F 4/06*** *(2006.01)*
***C08F 4/10*** *(2006.01)*

(86) Internationale Anmeldenummer:
**PCT/EP2007/008067**

(87) Internationale Veröffentlichungsnummer:
**WO 2008/034571 (27.03.2008 Gazette 2008/13)**

(54) **INITIATOR**

INITIATOR

INITIATEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.09.2006 DE 102006044465**

(43) Veröffentlichungstag der Anmeldung:
**10.06.2009 Patentblatt 2009/24**

(60) Teilanmeldung:
**10194978.2**

(73) Patentinhaber: **Ticona GmbH**
**65451 Kelsterbach (DE)**

(72) Erfinder:
- **HAUBS, Michael**
**55545 Bad Kreuznach (DE)**
- **HOFFMOCKEL, Michael**
**65527 Niedernhausen (DE)**
- **ROESCHERT, Horst**
**55437 Ober-Hilbersheim (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**US-A- 3 842 019**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft einen Initiator zur kationischen Polymerisation. Die Erfindung betrifft auch ein Verfahren zur kationischen Polymerisation von Monomeren in Gegenwart des Initiators und mittels des Verfahrens hergestellte Polymere.

Die kationische Polymerisation ist eine ionische Polymerisation, die über eine schrittweise Reaktion von Monomermolekülen an positiv geladene aktive Zentren abläuft. Nach dieser Methode lassen sich eine Reihe von Monomeren polymerisieren. Beispiele dafür sind Olefine, Vinylether, Vinylarene wie Styrol, vor allem aber Verbindungen mit Heteroatomen wie Ether, Thioether, Oxirane, Oxazoline, Ester und Acetale. Bekannte Initiatoren für die kationische Polymerisation sind Protonensäuren wie Perchlorsäure oder Trifluormethansulfonsäure oder Lewis-Säuren wie Bortrifluorid oder Aluminiumtrichlorid.

Besondere Bedeutung hat die kationische Polymerisation bei der Herstellung von Polyacetalen erlangt, die durch Polymerisation von Aldehyden über die Öffnung der Carbonyl Doppelbindung oder durch Ringöffnung von cyclischen Acetalen wie Trioxan, großtechnisch zumeist in Massepolymerisation hergestellt werden.

Die bekannten Initiatoren für die kationische Polymerisation sind aber in aller Regel mit bestimmten Nachteilen belastet. Bortrifluorid wird typischerweise als Gas unter hohem Druck gelagert und lässt sich nur schwer handhaben. Auch die Qualität von damit hergestellten Polyacetalen, insbesondere deren Langzeitstabilität, kann noch verbessert werden.

Die DE 2141600 beschreibt ein Verfahren zur Homo- und Copolymerisation von Trioxan in Gegenwart von Trifluormethansulfonsäure und ihren Homologen mit 1 - 18 C-Atomen als Initiator.
Die EP 0 678 535 beschreibt die Herstellung von Polyoxymethylen-Copolymeren mittels kationischer Polymerisation unter Verwendung von Trifluormethansulfonsäure oder dazu homologen Säuren und Anhydriden als Initiatoren. Der Initiator wird in einem Konzentrationsbereich von $5*10^{-6}$ bis $2*10^{-5}$ mol-%, bezogen auf das Hauptmonomere, eingesetzt. Die Initiatoren des zitierten Standes der Technik sind außerordentlich aktiv, besitzen aber gerade deshalb den Nachteil, dass schon geringe Dosierungsschwankungen zu unerwünschten Druckschwankungen im Polymerisationsreaktor führen können. Außerdem reagieren diese aktiven Initiatoren sehr empfindlich auf schon geringe Mengen an Verunreinigungen im Monomer, was sich direkt auf die Prozessstabilität auswirkt. So kommt es, dass diese Initiatoren trotz ihrer hohen Aktivität industriell zur Zeit nicht eingesetzt werden, da sie den Anforderungen der technischen Produktion bezüglich Zuverlässigkeit und Produktionskonstanz nicht genügen.

Aufgabe der vorliegenden Erfindung war es deshalb, einen neuen Initiator für die kationische Polymerisation zu finden, der einerseits sehr aktiv ist und zu qualitativ hochwertigen Polymeren führt, andererseits aber die hohen Anforderungen der technischen Produktion bezüglich Zuverlässigkeit und Produktionskonstanz erfüllt. Darüber hinaus soll der Initiator in Bezug auf seine Reaktivität in weiten Grenzen gezielt eingestellt und so an die jeweiligen Bedürfnisse im Produktionsbetrieb angepasst werden können.

Gelöst wird diese Aufgabe erfindungsgemäß durch einen Initiator für die kationische Polymerisation, dessen kennzeichnendes Merkmal darin zu sehen ist, dass der Initiator neben einer Protonensäure zusätzlich auch ein Salz einer Protonensäure enthält.

Unter einer Protonensäure ist erfindungsgemäß eine Verbindung zu verstehen, die gegenüber einem Monomeren als Protonendonator wirkt. Erfindungsgemäß besonders als Initiator geeignete Protonensäuren sind anorganische Säuren wie Schwefelsäure, Tetrafluorborsäure oder Perchlorsäure, aber auch organische Säuren wie fluorierte oder chlorierte Alkyl- oder Arylsulfonsäuren. Weitere Beispiele umfassen Homologe der Trifluormethansulfonsäure wie Pentafluorethansulfonsäure, Heptafluorpropansulfonsäure, Nonafluorbutansulfonsäure sowie Perfluorpentan-, -hexan- und -heptansulfonsäure.

Die Kationen der erfindungsgemäßen Salze können sowohl anorganischer als auch organischer Natur sein. Als anorganische Kationen kommen besonders die Alkali- oder Erdalkalimetallionen in Frage. Lithiumsalze sind wegen ihrer guten Löslichkeit in vielen Monomeren besonders bevorzugt. Beispiele von Protonensäure-Salzen mit anorganischen Kationen sind Lithiumtrifluorsulfonat oder Natriumtrifluorsulfonat. Als organische Kationen kommen besonders Ammoniumionen in Frage, wie z.B. Triethylammonium oder quartäre Ammoniumionen wie Tetramethylammonium, Triethylmethylammonium oder Tetraethylammonium. So kann z.B. Tetraethylammoniumperchlorat als Protonensäure-Salz verwendet werden. Bevorzugt sind Kationen, die eine gute Löslichkeit des Salzes in der Protonensäure und im Monomeren begünstigen.

Besonders bevorzugt sind substituierte Ammoniumionen mit der allgemeinen Formel (I),

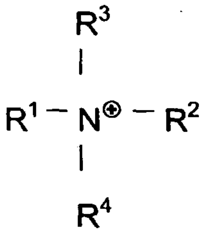

(I)

wobei $R^1$ - $R^4$ unabhängig voneinander Wasserstoff, eine Alkylgruppe wie Methyl, Ethyl, n-Propyl, iso-Propyl, n-Butyl, iso-Butyl oder eine Arylgruppe wie Phenyl oder 4-Methoxyphenyl bedeuten.

Substituierte Ammoniumionen sind auch deshalb bevorzugt, da sich die entsprechenden Salze sehr einfach durch Mischen der Protonensäure mit dem entsprechenden Amin herstellen lassen. So entsteht aus Triethylamin und Trifluormethansulfonsäure das Triethylammoniumtriflat.

Als organische Kationen können auch protonierte stickstoffhaltige Verbindungen verwendet werden, wie z.B. protoniertes Imidazol oder protonierte Amide. Als Amide können z. B. Dimethylformamid, Dimethylacetamid oder N-Methylpyrrolidon verwendet werden.

Die Anionen der Salze werden so gewählt, dass sie eine geringe Nukleophilie und eine gute thermische Stabilität besitzen. Beispiele sind Perchlorat, Tetrafluoroborat, Tetraphenylborat, Hexafluorophoshat und das bevorzugte Trifluormethansulfonat.

Das molare Verhältnis von Protonensäure zu Salz kann erfindungsgemäß in einem breiten Fenster variiert werden. Darin ist gerade der besondere und überraschende Vorteil des neuen Initiators zu sehen. Prinzipiell sind molare Verhältnisse von Protonensäure zu Salz im Bereich von 1 : 0,01 bis 1 : 2000 möglich, vorzugsweise im Bereich von 1 : 0,5 bis 1 : 10, besonders bevorzugt im Bereich von 1 : 0,8 bis 1 : 8, ganz besonders bevorzugt von 1 : 1 bis 1 : 4.

Die Menge an Initiator, die erfindungsgemäß eingesetzt wird, liegt im Bereich von $10^{-6}$ Gew.-% bis 1 Gew.-%, bevorzugt im Bereich von $10^{-5}$ Gew.-% bis $10^{-3}$ Gew.-% und besonders bevorzugt im Bereich von $2*10^{-5}$ Gew.-% bis $5*10^{-4}$ Gew.-%, bezogen auf das Gesamtgewicht an eingesetzten Monomeren. Die Menge an eingesetztem Initiator hängt von der chemischen Zusammensetzung der Protonensäure und der chemischen Zusammensetzung der Monomeren bzw. der Monomermischung ab. Beispielsweise wird zur Homopolymerisation von 1,3,5-Trioxan typischerweise weniger Initiator verwendet als zur Copolymerisation von Trioxan mit Dioxolan.

Der erfindungsgemäße Initiator lässt sich besonders bevorzugt für die Homo- oder Copolymerisation von 1,3,5-Trioxan (Trioxan) anwenden. Als Monomer kann aber auch grundsätzlich Tetroxan eingesetzt werden. Als Comonomere können die bekanntermaßen mit Trioxan copolymerisierbaren Comonomeren eingesetzt werden, deren Mengenanteil im Monomerengemisch im Bereich von 0,1 bis 25 Gew.-% liegt, vorzugsweise im Bereich von 0,5 bis 10 Gew.-%, jeweils bezogen auf das Gewicht der Gesamtmischung.

Als geeignete Comonomere bekannt sind cyclische Ether und besonders cyclische Acetale mit mindestens 2 benachbarten C-Atomen und 3 bis 9 Ringgliedern. Beispiele dafür sind Ethylenoxid, Propylenoxid, Trimethylenoxid, Tetrahydrofuran, Butadienoxid, 1,3-Dioxolan, 1,4-Butandiolformal, Diethylenglykolformal, o-Xylenglykolformal, Thiodiglykolformal oder 1,3-Oxthiolan oder Gemische von diesen. Weitere copolymerisierbare Comonomere sind olefinisch ungesättigte Verbindungen wie Styrol, Isobutylen, oder lineare Polyacetale wie Polydioxolan.

Die Molmasse der mit dem erfindungsgemäßen Initiator hergestellten Homo- oder Copolymeren wird ggf. durch übliche Regler auf die angestrebten Werte eingestellt. Als Regler kommen normalerweise Acetale oder Formale einwertiger Alkohole zum Einsatz. Besonders bevorzugt ist Methylal.

Der erfindungsgemäße Initiator kann unverdünnt oder in verdünnter Form eingesetzt werden. Beim Einsatz in verdünnter Form wird der Initiator in einem Lösungsmittel gelöst. Die Konzentration des Initiators im Lösungsmittel liegt im Bereich von $10^{-4}$ Gew.-% bis 10 Gew.-%, bevorzugt im Bereich von $10^{-3}$ Gew.-% bis 0,2 Gew.-% und besonders bevorzugt im Bereich von $10^{-2}$ Gew.-% bis 0,1 Gew.-%. Als Lösemittel für den Initiator eignen sich inerte organische Lösemittel wie aliphatische oder cycloaliphatische Ether mit 4 bis 10 C-Atomen, halogenierte Kohlenwasserstoffe, Glykolether, Methylformiat oder ähnliche. Besonders bevorzugt als Lösungsmittel ist Methylal oder 1,3-Dioxolan.

Typischerweise wird der Initiator so zubereitet, dass Protonensäure und Salz in dem Lösungsmittel gelöst werden und diese Lösung zum Starten der Polymerisation verwendet wird.

Es ist aber auch möglich, das in dem Initiator enthaltene Salz in situ herzustellen. Beispielsweise kann die Mischung der Monomeren eine Base enthalten, und diese Mischung wird mit Protonensäure in molarem Überschuss, bezogen auf die Base, versetzt. Die Protonensäure reagiert dann mit der Base unter Salzbildung, derart dass überschüssige Protonensäure neben Salz vorliegt.

Dabei lässt sich das molare Verhältnis von Protonensäure zu Salz folgendermaßen berechnen:

Sei $n_{Base}$ die Anzahl der Mole an Base, die der Monomermischung zugesetzt wurde und sei $n_{Säure}$ die Anzahl der Mole an Protonensäure, die der basenhaltigen Monomermischung zur Initiierung der Polymerisation zugefügt wurde,
dann beträgt das molare Verhältnis (Vps) von Protonensäure zu Salz in der Polymerisationsmischung :

$$Vps = (n_{Säure} - n_{Base}) / n_{Base}$$

(die Formel ist nur gültig, wenn $n_{Säure} > n_{Base}$, d.h. wenn die Protonensäure im molaren Überschuss zur Base vorliegt und wenn Säure und Base die gleiche Wertigkeit haben)

Bei der kontinuierlichen Herstellung von Polymeren kann diese in situ Herstellung des Initiators besonders vorteilhaft eingesetzt werden. Dabei wird zur Herstellung der Initiatorlösung die Protonensäure und die Base bzw. deren Lösungen kontinuierlich einer Mischeinrichtung zugeführt, wobei die Protonensäure im stöchiometrischen Überschuss zugeführt wird. Durch Variation der Förderleistungen von Säure und Base bzw. deren Lösungen kann sowohl die Säurekonzentration als auch das Verhältnis von Säure zu Salz beliebig eingestellt und so den Anforderungen angepasst werden. In diesem Fall lässt sich das molare Verhältnis von Protonensäure zu Salz $(Vps)_{cont}$ nach folgender Formel berechnen:

$$(Vps)_{cont} = (F_S * C_S / MG_S - F_B * C_B / MG_B) * MG_B / (F_B * C_B)$$

Hierbei bedeuten:

$F_S$ : Flussrate der Protonensäurelösung in kg/h
$C_S$ : Konzentration der Protonensäure in der Protonensäurelösung in Gew.-%
$MG_S$ : Molmasse der Protonensäure in g/mol
$F_B$ : Flussrate der Basenlösung in kg/h
$C_B$ : Konzentration der Base in der Basenlösung in Gew.-%
$MG_B$ : Molmasse der Base in g/mol

(auch diese Formel setzt voraus, dass Säure und Base die gleiche Wertigkeit haben)

Ein weiterer Vorteil des erfindungsgemäßen Initiators liegt darin, dass seine Aktivität im Vergleich zu Initiator aus reiner Protonensäure (ohne Salzzusatz) weniger stark von Verunreinigungen in der Monomermischung beeinflusst wird.

Es war besonders überraschend, dass sich die Reaktivität des erfindungsgemäßen Initiators durch das Verhältnis von Protonensäure zu Salz für die kationische Polymerisation über einen sehr weiten Bereich genau einstellen lässt. Dadurch ist es möglich, den zeitlichen Verlauf der Polymerisation durch die chemische Zusammensetzung des Initiators exakt auf einen vorliegenden Polymerisationsreaktor anzupassen.

Die Erfindung bezieht sich auch auf ein Verfahren zur kationischen Polymerisation oder Copolymerisation von Monomeren in Gegenwart eines Initiators, der neben einer Protonensäure zusätzlich auch ein Salz einer Protonensäure enthält. Die Polymerisation wird vorzugsweise bei einer Temperatur im Bereich von 60 bis 180 °C und unter einem Druck im Bereich von 1 bis 100 bar, vorzugsweise von 2 bis 60 bar, durchgeführt.

Bevorzugt wird das zuvor beschriebene Verfahren zur Copolymerisation von Trioxan mit Comonomeren eingesetzt, wobei die Comonomeren in der Ausgangsmischung in einer Menge im Bereich von 0,1 bis 25 Gew.-%, vorzugsweise im Bereich von 0,5 bis 10 Gew.-%, bezogen auf das Gesamtgewicht der Ausgangsmischung vorliegen.

Die Erfindung bezieht sich darüber hinaus auf die Verwendung des zuvor beschriebenen Initiators, welcher neben einer Protonensäure zusätzlich auch ein Salz einer Protonensäure enthält, zur kationischen Polymerisation oder Copolymerisation von Monomeren.

Die Erfindung soll im Folgenden durch Ausführungsbeispiele näher beschrieben werden, ohne auf die konkret dargestellten Ausführungsformen der Initiatoren und der kationischen Polymerisation beschränkt zu sein.

**Beispiel 1.**

Herstellung der Initiatorlösungen 1 bis 4:

In einer Lösung von Trifluormethansulfonsäure ("Triflic") in Methylal werden verschiedene Menden an Triethylammoniumtriflat ("Triflat"), wie in Tabelle 1 angegeben, unter Rühren gelöst.

Tabelle 1.

| Initiatorlösung Nr. | 1 | 2 | 3 | 4 |
|---|---|---|---|---|
| Triflic (mg) | 80 | 80 | 80 | 80 |
| Triflat (mg) | 0 | 135 | 270 | 540 |
| Methylal (kg) | 1 | 1 | 1 | 1 |

**Beispiele 2 - 5.**

In vier verschiedenen Experimenten werden zu jeweils 100 g Trioxan jeweils 100 Mikroliter der in Beispiel 1 hergestellten Initiatorlösungen (1 - 4) unter Rühren gegeben und so kationisch polymerisiert. Der Temperaturverlauf der Reaktionsmischungen über die Zeit wird mit einem Thermoelement gemessen und aufgezeichnet. Die gemessenen Kurven sind in Abbildung 1 wiedergegeben. Zum Zeitpunkt t = 0 sec wurde die Initiatorlösung zugegeben.

Aus dem Kurvenverlauf lässt sich die Induktionszeit und die Temperaturanstiegsgeschwindigkeit dT/dt, die proportional zur Polymerisationsgeschwindigkeit ist, ablesen. Die Ergebnisse sind in Tabelle 2 wiedergegeben:

Tabelle 2.

| Initiatorlösung Nr. | Induktionszeit | Temperaturanstiegs-Geschwindigkeit bei 90°C |
|---|---|---|
| 1 | 7 sec | 6.1°C/sec |
| 2 | 14 sec | 4.8°C/sec |
| 3 | 22 sec | 3.2°C/sec |
| 4 | 53 sec | 1.4°C/sec |

Aus den durchgeführten Ausführungsbeispielen wird deutlich, wie mit zunehmendem Verhältnis von Salz zu Protonensäure bei gleicher Protonensäurekonzentration eine zunehmende Verlangsamung der Polymerisation stattfindet.

Die Schmelzindices der Polymeren aus Beispielen 2 - 5 waren innerhalb der Fehlergrenze identisch und lagen bei 4,5 ml/10 min (DIN ISO 1133; 190°C bei 5 kg Auflagegewicht).

**Patentansprüche**

**1.** Verfahren zur kationischen Copolymerisation von Monomeren in Gegenwart eines Initiators, umfassend:

i) Bereitstellung einer Mischung von Monomeren und einer Base, wobei als Hauptmonomer Trioxan und Comonomere in einer Menge im Bereich von 0,1 bis 25 Gew.-% eingesetzt werden;
ii) Zuführen einer Protonensäure in molarem Überschuss, bezogen auf die Base, zur Mischung, wobei die Protonensäure mit der Base in i) reagiert unter Ausbildung eines Salzes, so dass das Salz wie auch überschüssige Protonensäure vorliegt;
iii) Copolymerisieren der Monomere bei einer Temperatur im Bereich von 60 bis 180 °C und unter einem Druck im Bereich von 1 bis 100 bar in Gegenwart des Initiators, der die Protonensäure und das Salz umfasst, wobei das Salz die Alkali- oder Erdalkalisalze von Protonensäuren und/oder substituierten Ammoniumsalzen von Protonensäuren enthält, wobei die Kationen der Ammoniumsalze die allgemeine Formel (I) haben

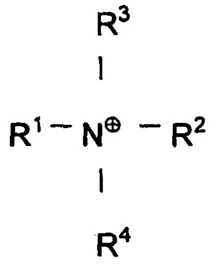

(I)

und wobei $R^1$ - $R^4$ unabhängig voneinander Wasserstoff, eine Alkylgruppe wie Methyl, Ethyl, n-Propyl, iso-Propyl, n-Butyl, iso-Butyl oder eine Arylgruppe aus gewählt aus der Gruppe bestehend aus Phenyl und 4-Methoxyphenyl bedeuten; und wobei das molare Verhältnis von Protonensäure zu Salz in dem Initiator von 1 : 0,5 bis 1 : 10 liegt.

**2.** Verfahren gemäß Anspruch 1, wobei das Verfahren ein kontinuierliches Verfahren ist.

**3.** Verfahren gemäß wenigstens einem der vorangehenden Ansprüche, wobei die Protonensäure anorganische Säuren ausgewählt aus der Gruppe bestehend aus Schwefelsäure, Tetrafluorborsäure, Perchlorsäure und organische Sulfonsäuren umfasst.

**4.** Verfahren gemäß Anspruch 3, wobei die organische Sulfonsäure eine fluorierte oder chlorierte Alkyl- oder Arylsulfonsäure ist.

**5.** Verfahren gemäß Anspruch 4, wobei die organische Sulfonsäure ausgewählt ist aus der Gruppe bestehend aus Trifluormethansulfonsäure, Pentafluorethansulfonsäure, Heptafluorpropansulfonsäure, Nonafluorbutansulfonsäure, Perfluorpentansulfonsäure, Perfluorhexansulfonsäure und Perfluorheptansulfonsäure.

**6.** Verfahren gemäß wenigstens einem der vorangehenden Ansprüche, wobei das molare Verhältnis der Protonensäure zu Salz im Initiator im Bereich von 1 : 1 bis 1 : 4 liegt.

**7.** Verfahren gemäß wenigstens einem der vorangehenden Ansprüche, wobei die Copolymerisation bei einem Druck im Bereich von 2 bis 60 bar durchgeführt wird.

**8.** Verfahren gemäß wenigstens einem der vorangehenden Ansprüche, wobei das Comonomere in einer Menge von 0,5 bis 10 Gew.-%, bezogen auf das Gewicht der Gesamtmischung, eingesetzt wird.

**9.** Verfahren gemäß mindestens einem der vorangehenden Ansprüche, wobei der Initiator in einer Menge von $10^{-6}$ Gew.-% bis 1 Gew.-%, bezogen auf das Gesamtgewicht an eingesetzten Monomeren, eingesetzt wird.

**10.** Verfahren gemäß mindestens einem der vorangehenden Ansprüche, wobei die Protonensäure Trifluormethansulfonsäure und das Salz Triethylammoniumtriflat umfasst.

## Claims

**1.** A process for the cationic copolymerization of monomers in the presence of an initiator, comprising:

i) providing a mixture of monomers and a base, wherein trioxane as the main monomer and comonomers in an amount within a range of from 0.1 to 25% by weight are employed;
ii) supplying to the mixture a protonic acid in molar excess relative to the base, wherein the protonic acid reacts with the base in i) to form a salt, so that the salt as well as excess protonic acid are present;
iii) copolymerizing the monomers at a temperature within a range of from 60 to 180°C and under a pressure within a range of from 1 to 100 bar in the presence of an initiator comprising the protonic acid and the salt, wherein said salt contains the alkali or alkaline earth metal salts of protonic acids and/or substituted ammonium salts of protonic acids, wherein the cations of the ammonium salts have the general formula (I)

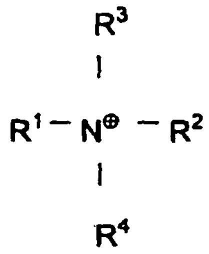

(I)

and wherein $R^1$ to $R^4$ independently represent hydrogen, an alkyl group, such as methyl, ethyl, n-propyl, isopropyl, n-butyl, isobutyl or an aryl group selected from the group consisting of phenyl and 4-methoxyphenyl; and wherein the molar ratio of protonic acid to salt in the initiator is from 1 : 0.5 to 1 : 10.

**2.** The process according to claim 1, wherein said process is a continuous process.

**3.** The process according to at least one of the preceding claims, wherein said protonic acid comprises inorganic acids selected from the group consisting of sulfuric acid, tetrafluoroboric acid, perchloric acid and organic sulfonic acids.

**4.** The process according to claim 3, wherein said organic sulfonic acid is a fluorinated or chlorinated alkyl- or arylsulfonic acid.

**5.** The process according to claim 4, wherein said organic sulfonic acid is selected from the group consisting of trifluoromethanesulfonic acid, pentafluoroethanesulfonic acid, heptafluoropropanesulfonic acid, nonafluorobutanesulfonic acid, perfluoropentanesulfonic acid, perfluorohexanesulfonic acid and perfluoroheptanesulfonic acid.

**6.** The process according to at least one of the preceding claims, wherein the molar ratio of the protonic acid to the salt in the initiator is within a range of from 1 : 1 to 1 : 4.

**7.** The process according to at least one of the preceding claims, wherein said copolymerization is performed at a pressure within a range of from 2 to 60 bar.

**8.** The process according to at least one of the preceding claims, wherein said comonomer is employed in an amount of from 0.5 to 10% by weight, based on the weight of the total mixture.

**9.** The process according to at least one of the preceding claims, wherein said initiator is employed in an amount of from $10^{-6}$% by weight to 1% by weight, based on the total weight of the monomers employed.

**10.** The process according to at least one of the preceding claims, wherein said protonic acid comprises trifluoromethanesulfonic acid, and said salt comprises triethylammonium triflate.

## Revendications

**1.** Procédé pour la copolymérisation cationique de monomères en présence d'un initiateur, comprenant les étapes consistant à:

i) procurer un mélange de monoméres et d'une base, dans lequel trioxane en tant que monomère principal et des comonomères dans une quantité comprise entre 0,1 et 25 % en poids sont utilisés ;
ii) alimenter au mélange un acide protonique en excès molaire par rapport à la base, dans lequel l'acide protonique réagit avec la base dans i) pour former un sel, de sorte que le sel ainsi qu'un excès de l'acide protonique soient présents ;
iii) copolymériser les monomères à une température comprise entre 60 et 180°C et sous une pression comprise entre 1 et 100 bar en présence d'un initiateur comprenant l'acide protonique et le sel, le sel contenant les sels de métaux alcalins et alcalino-terreux d'acides protoniques et/ou des sels d'ammonium substitués d'acides

protoniques, dans lequel les cations des sels d'ammonium ont la formule générale (I)

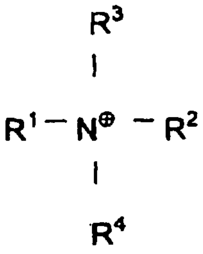

(I)

et dans lequel $R^1$ à $R^4$ représentent indépendamment hydrogène, un groupe alkyle tel que méthyle, éthyle, n-propyle, isopropyle, n-butyle, isobutyle ou un groupe aryle choisi dans le groupe consistant en phényle et 4-méthoxyphényle; et dans lequel le rapport molaire de l'acide protonique au sel dans l'initiateur est de 1 : 0,5 à 1 : 10.

**2.** Procédé selon la revendication 1, dans lequel le procédé est un procédé en continu.

**3.** Procédé selon au moins une des revendications précédentes, dans lequel l'acide protonique comprend des acides inorganiques choisis dans le groupe consistant en l'acide sulfurique, l'acide tetrafluoroborique, l'acide perchlorique et des acides sulfoniques organiques.

**4.** Procédé selon la revendication 3, dans lequel l'acide sulfonique organique est un acide alkylsulfonique ou arylsulfonique fluoré ou chloré.

**5.** Procédé selon la revendication 4, dans lequel l'acide sulfonique organique est choisi dans le groupe consistant en l'acide trifluorométhanesulfonique, l'acide pentafluoroéthanesulfonique, l'acide heptafluoropropanesulfonique, l'acide nonafluorobutanesulfonique, l'acide perfluoropentanesulfonique, l'acide perfluorohexanesulfonique et l'acide perfluoroheptanesulfonique.

**6.** Procédé selon au moins l'une des revendications précédentes, dans lequel le rapport molaire de l'acide protonique au sel dans l'initiateur est compris entre 1 : 1 et 1 : 4.

**7.** Procédé selon au moins l'une des revendications précédentes, dans lequel la copolymérisation est effectuée sous une pression comprise entre 2 et 60 bar.

**8.** Procédé selon au moins l'une des revendications précédentes, dans lequel le comonomère est utilisé en une quantité de 0,5 à 10 % en poids, par rapport au poids du mélange total.

**9.** Procédé selon au moins l'une des revendications précédentes, dans lequel l'initiateur est utilisé en une quantité de $10^{-6}$ % en poids à 1 % en poids, par rapport au poids total des monomères utilisés.

**10.** Procédé selon au moins l'une des revendications précédentes, dans lequel l'acide protonique comprend l'acide trifluorométhanesulfonique et le sel comprend du triflate de triéthylammonium.

Abbildung 1:

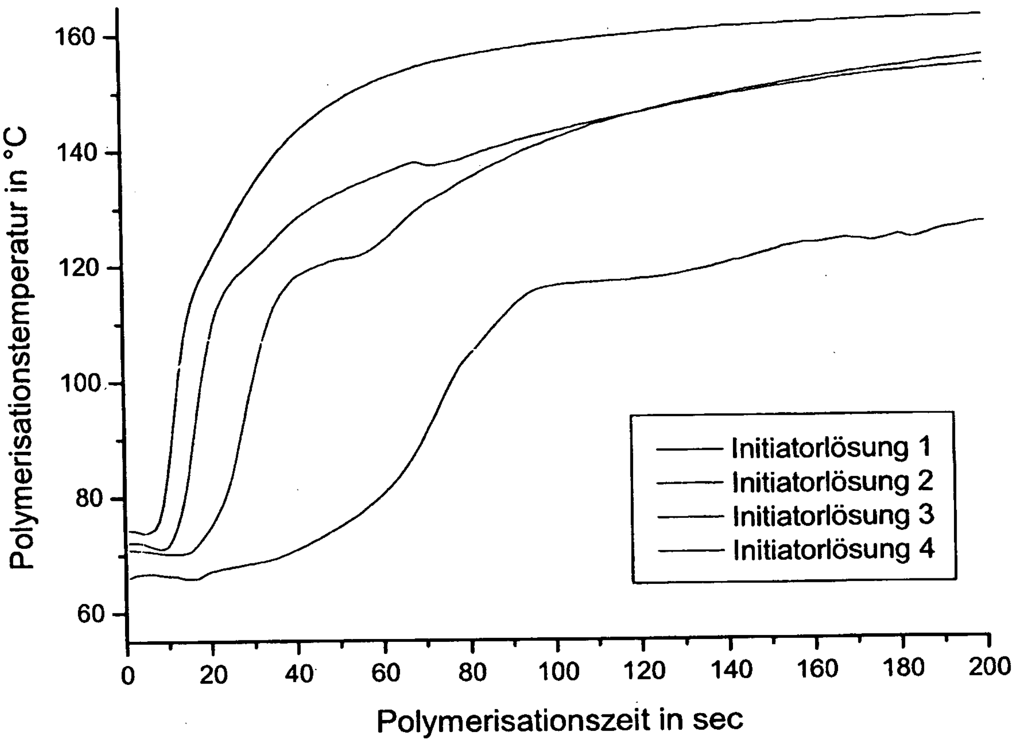
160
140
120
100
80
60
0
20
40
60
80
100
120
140
160
180
200
Polymerisationstemperatur in °C
Polymerisationszeit in sec
Initiatorlösung 1
Initiatorlösung 2
Initiatorlösung 3
Initiatorlösung 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2141600
- EP 0678535 A